# EUROPEAN PATENT APPLICATION

(11) **EP 4 516 840 A1**
(43) Date of publication of application: **05.03.2025**
(21) Application number: 23193629.5
(22) Date of filing: 28.08.2023
(51) Int. Cl.: C08J 5/18, C08L 23/06

(54) **POLYMER BLEND FOR THE PRODUCTION OF A MONO-AXIALLY ORIENTED FILM**

(71) Applicant: Basell Polyolefine GmbH, 50389 Wesseling (DE)
(72) Inventor: NITZ, Hansjoerg, 65926 Frankfurt (DE); PERDOMI, Gianni, 44122 Ferrara (IT); EDERLE, Yannick, 69002 Lyon (FR); BASSI, Paolo, 44122 Ferrara (IT)
(74) Representative: LyondellBasell

(57) **Abstract**

The present disclosure relates to a polymer blend for the production of a mono-axially oriented polymer film, said blend comprising:
A) from 2 to 35 wt.% of a first polyethylene component, which has a density from 0.948 to 0.960 g/cm³, a Melt Index MIF from 35 to 100 g/10min and Melt Flow Ratio MIFIMIP from 15 to 30; and
B) from 65 to 98 wt.% of a second polyethylene component having a density from 0.949 to 0.965 g/cm³ and a Melt Index MIF from 5 to 30 g/10 min.

## Description

### FIELD OF THE INVENTION

The present disclosure relates to a polymer blend, a mono-axially oriented polymer film comprising said blend, and a method of production of the mono-axially oriented polymer film.

### BACKGROUND OF THE INVENTION

Polymeric films are widely used, both in industrial manufacturing processes and in the nonindustrial sector for the wholesale and retail delivery of goods to the consumer market.

Currently, films composed of ethylene based thermoplastic polymers dominate certain of these market applications, such as the market for household disposables, trash bags and liners; overwrap films and bags for laundry and dry cleaning goods; and shipping and carry out bags for retail merchandising of non-perishable goods. In other aspects of the consumer goods delivery market, ethylene based polymer films only weakly compete, if at all, with other more expensive polymer films such as plasticized polyvinyl chloride films and/or polypropylene films, such as in the heat-shrink wrap film market for the taut-contour fit wrapping of various items, particularly perishables such as cuts of meat, poultry, and fish. Yet for other applications, such as for packaging of produce, package constructions for cereals, dry foods, and snack foods ethylene based polymer films compete somewhat in certain circumstances of these applications.

Due to their valuable mechanical and optical properties, oriented polymeric films are increasingly requested for packaging applications.

Examples of oriented polyethylene films are disclosed in WO9722470.

However, to achieve an optimal profile of properties, oriented polymeric films, including the mono-axially oriented films, generally have a multiple layer structure, with layers of different polymeric materials, like for instance polypropylene, polyethylene, polyethylene terephthalate, polyamides, ethylene polyvinyl alcohol.

Such complex structures require complex processing in the film preparation and are hardly compliant with the present sustainability and recyclability requirements.

An attractive candidate for the preparation of mono-axially oriented films with reduced complexity, in terms of composition and structure, is polyethylene, in particular the high density polyethylene (HDPE).

In fact, HDPE can potentially achieve high mechanical properties, as it can be oriented up to relatively high stretch ratios.

Moreover, HDPE can achieve valuable optical properties, when properly treated.

However, the use of HDPE in the preparation of oriented films has been strongly limited by processing difficulties, resulting into often insufficient final properties.

The object of the present disclosure is to provide a polymer blend, a use thereof, a method of production of a mono-axially oriented polymer film and a mono-axially oriented polymer film that allow the drawbacks of the known art to be at least partially overcome, and which are, at the same time, simple and inexpensive to implement.

### SUMMARY OF THE INVENTION

Thus the present disclosure provides a polymer blend comprising:
A) from 2 to 35 wt.%, preferably from 5 to 30 wt.%, more preferably from 10 to 30 wt.%, of a first polyethylene component, which has a density from 0.948 to 0.960 g/cm³, a Melt Index MIF from 35 to 100 g/10min and Melt Flow Ratio MIF/MIP from 15 to 30 (in particular, up to 25); and
B) from 65 to 98 wt.%, preferably from 70 to 95 wt.%, more preferably from 70 to 90 wt.%, of a second polyethylene component having a density from 0.949 to 0.965 g/cm³ and a Melt Index MIF from 5 to 30 g/10 min.;
wherein the wt.% of the first polyethylene component and of second polyethylene component is with respect to the overall weight of the first polyethylene component and of the second polyethylene component.

It has been experimentally observed that the present polymer blend provides mono-axially oriented polymer films with surprisingly good optical (in particular, haze and gloss) and mechanical (in particular, strength at break) properties.

### DETAILED DESCRIPTION OF THE INVENTION

In the present text: MIF indicates the Melt Index measured with 21.6 kg at 190°C; MIP indicates the Melt Index measured with 5 kg at 190°C; and MIE indicates the Melt Index with 2.16 kg at 190°C.

The first polyethylene component A) and the second polyethylene component B) can be selected from ethylene homopolymers and ethylene copolymers containing alpha-olefin monomer units (preferably in amounts up to 10% by weight) and their mixtures. Examples of the said alpha-olefin monomer units are those having from 3 to 8 carbon atoms, in particular propylene, 1-butene, 1-pentene, 1-hexene, 1-octene and 4-methyl-1-pentene. 1-butene and 1-hexene are preferred.

Said homopolymers and copolymers can be obtained by way of polymerization processes in the presence of coordination catalysts. Said processes and the homopolymers and copolymers obtained from them are widely described in the art.

In particular it is possible to carry out the polymerization process in the presence of a Ziegler-Natta catalyst or single site catalyst.

As is well known, a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on MgCl₂.

Particularly preferred catalysts comprise the product of the reaction of said organometallic compound of group 1, 2 or 13 of the Periodic Table of elements, with a solid catalyst component comprising a Ti compound supported on MgCl₂.

Preferred organometallic compounds are the organo-Al compounds.

The single site catalysts are known in the art and are generally selected from metallocene and non-metallocene single site catalysts.

Examples of metallocene single site catalysts are zirconocenes and hafnocenes, for instance cyclopentadienyl or indenyl complexes of zirconium or hafnium, like bis (cyclopentadienyl) zirconium dichloride; bis (indenyl) zirconium dichloride or bis (indenyl) hafnium dichloride.

Examples of non-metallocene single site catalysts are iron complex compounds preferably having a tridentate ligand.

Particularly suited tridentate ligands are 2,6-Bis[1-(phenylimino)ethyl] pyridine and preferably the corresponding compounds wherein both the two phenyl groups are substituted in the ortho-position with a halogen or tert. alkyl substituent.

Specific examples are 2,6-Bis[1-(2-tert.butylphenylimino)ethyl]pyridine iron(II) dichloride; 2,6-Bis[1-(2-tert.butyl-6-chlorophenylimino)ethyl]pyridine iron(II) dichloride or 2,6-Bis[1-(2,4-dichlorophenylimino)ethyl]pyridine iron(II) dichloride.

Said metallocene and non-metallocene single site catalysts can also be used in combination.

Preferably, the single site catalysts are reacted with activating compounds (cocatalysts), preferred examples of which are aluminoxanes, such as mono-methylaluminoxane (MAO), for instance.

The polymerization, which can be continuous or batch, is carried out, in the presence of said catalysts, following known techniques and operating in liquid phase, in the presence or not of inert diluent, or in gas phase, or by mixed liquid-gas techniques.

Reaction time, pressure and temperature relative to the polymerization steps are not critical, however it is best if the temperature is from 50 to 100°C. The pressure can be atmospheric or higher.

The regulation of the molecular weight is carried out by using known regulators, hydrogen in particular.

In general, the term "copolymer" is meant to include also polymers containing more than one kind of comonomers, such as terpolymers.

All the said ethylene homopolymers and copolymers are available on the market. Specific commercial polymers suited for producing the present polymer blend are described in the examples.

Advantageously but not necessarily, the first polyethylene component has a tensile modulus on compression molded plaque of at least 650 MPa (in particular, at least 800 MPa; more in particular, at least 850 MPa). According to some non-limiting embodiments, the first polyethylene component has a tensile modulus on compression molded plaque of up to 1300 MPa (in particular, up to 1200 MPa; more in particular, up to 1100 MPa).

Advantageously but not necessarily, the second polyethylene component has tensile modulus on compression molded plaque up to 2000 MPa (more particularly, up to 1800 MPa).

According to some non-limiting embodiments, the second polyethylene component has tensile modulus on compression molded plaque of at least 500 MPa (in particular, at least 600 MPa; more in particular, at least 800 MPa).

Advantageously but not necessarily, the second polyethylene component has a weight average molecular weight Mw equal to or lower than 170000 g/mol (in particular, equal to or lower than 160000 g/mol).

In some non-limiting cases, the second polyethylene component has a Mw equal to or higher than 90000 g/mol (in particular, equal to or higher than 100000 g/mol).

According to particularly preferred but not limiting embodiments, the second polyethylene component has a Mw/Mn equal to or lower than 18.0 (in particular, equal to or lower than 15.0).

In some non-limiting cases, the second polyethylene component has a Mw/Mn equal to or higher than 5.0 (in particular, equal to or higher than 6.0).

According to some non-limiting embodiments, the second polyethylene component has a number average molecular weight Mn equal to or higher than 9000 g/mol (in particular, equal to or higher than 10000 g/mol); in particular, equal to or lower than 25000 g/mol (more in particular, equal to or lower than 22000 g/mol).

According to some non-limiting embodiments, the second polyethylene component has z-average molecular weight Mz lower than 800000 g/mol (in particular, equal to or lower than 750000 g/mol); in particular, equal to or higher than 200000 g/mol (more in particular, equal to or higher than 250000 g/mol).

Advantageously but not necessarily, the first polyethylene component has a mass-average molecular weight Mw equal to or higher than 175000 g/mol (in particular, equal to or higher than 185000 g/mol).

In some non-limiting cases, the first polyethylene component has a Mw equal to or lower than 250000 g/mol (in particular, equal to or lower than 210000 g/mol).

Advantageously but not necessarily, the first polyethylene component has a Mw/Mn equal to or higher than 20.0 (in particular, equal to or higher than 22.0; more in particular, equal to or higher than 24.0).

In some non-limiting cases, the first polyethylene component has a Mw/Mn equal to or lower than 35 (in particular, equal to or lower than 30).

According to some non-limiting embodiments, the first polyethylene component has a z-average molecular weight Mz equal to or higher than 800000 g/mol (in particular, equal to or higher than 900000 g/mol); in particular, equal to or lower than 150000 g/mol (more in particular, equal to or lower than 120000 g/mol).

According to some non-limiting embodiments, the first polyethylene component has a number-average molecular weight Mn equal to or lower than 9000 g/mol (in particular, equal to or lower than 8000 g/mol); in particular, equal to or higher than 4000 g/mol (more in particular, equal to or higher than 6000 g/mol).

In all cases, Mw, Mn and Mz are measured with gel permeation chromatography (GPC).

It has been experimentally observed that with a second polyethylene component having a relatively low Mw (and/or Mz) and/or Mw/Mn (see above) it is possible to obtain bioriented polymer films with particularly good optical and mechanical properties.

Advantageously but not necessarily, the first polyethylene component has a density from 0.950 to 0.960 g/cm³. Alternatively or additionally, the second polyethylene component has a density from 0.952 to 0.960 g/cm³.

Advantageously but not necessarily, the first polyethylene component has a Melt Index MIF from 40 to 80 g/10min., more preferably from 45 to 80 g/10min.

Advantageously but not necessarily, the first polyethylene component has a Melt Index MIP from 1.2 to 6.0 g/10 min.

Advantageously but not necessarily, the second polyethylene component has a Melt Index MIF from 5 to 28 g/10min., more preferably from 10 to 25 g/10min.

Alternatively or additionally, the said second polyethylene component has a Melt Index MIE from 0.1 to 3 g/min., more preferably from 0.5 to 2 g/10min.

Advantageously but not necessarily, the second polyethylene component has a MIFIMIP from 5 to 14, more preferably from 5 to 12.

The present polymer blend can also contain conventional additives.

Examples of these additives are heat stabilizers, antioxidants, UV absorbers, light stabilizers, metal deactivators, compounds which destroy peroxide, and basic costabilizers, typically in amounts of from 0.01 to 10 % by weight, preferably from 0.1 to 5 % by weight, with respect to the total weight of the polymer blend (I).

The present polymer blend can be prepared by a process comprising a combination step, during which the first polyethylene component and the second polyethylene component are combined by melting and mixing the components, and the mixing is effected in a mixing apparatus at temperatures generally of from 160 to 250°C.

Any known apparatus and technology can be used for this purpose.

Useful melt-mixing apparatus in this context are in particular extruders or kneaders, and particular preference is given to twin-screw extruders. It is also possible to premix the components at room temperature in a mixing apparatus.

The present mono-axially oriented polymer film, which is another embodiment of the present disclosure, can be monolayer or multilayer, wherein at least one layer comprises the present polymer blend.

As it is mono-axially oriented, it is stretched in one direction (only).

Preferably it is a machine direction oriented (MDO) film, hence it is stretched in the machine direction.

For "machine direction" it is meant the direction into which the film is extruded.

In particular, the present mono-axially oriented polymer film is stretched with a preferred stretch ratio from 3:1 to 9:1.

Preferably, the mono-axially oriented polymer film has a thickness equal to or smaller than 250 µm (in particular, equal to or smaller than 210 µm).

A preferred lower limit is of 10 µm in all cases.

In another embodiment, it is herein provided a method of production of the present mono-axially oriented polymer film.

More precisely but not necessarily, the mono or multilayer mono-axially oriented polymer film can be prepared with known processes.

Said processes comprise a stretching step carried out on a primary film comprising the present polymer blend.

In some non-limiting cases, the primary film before stretching has a thickness of at least 0.3 mm (in particular, at least 0.5 mm).

In general the primary film is conveyed through a series of rollers having different rotation speeds.

In particular the mono-axially oriented polyethylene film can be prepared using the flat die extrusion and cooling on chill rolls, or via annular die extrusion and air cooling of the blown film obtained. The so obtained primary film is then passed through a stretching unit by rollers moving faster than the rate at which the polymer is extruded. This orients the film in the machine direction (MD).

The film extrusion is carried out with known techniques, preferably operating at temperatures from 180 to 300°C.

In the orientation stage, carried out in the stretching unit, the main operative conditions are, preferably:
- Pre-heating temperature: 120 - 130°C;
- Pre-heating time: 60 - 100 sec.;
- Stretching speed: 15 - 40 mm/sec.;
- Stretching rate: 30 - 50%/sec.;
- Stretch ratio: 3:1 - 9:1.

After stretching, the film is heat-set to hold the orientation and then reeled up.

In all the said processes, heating can be carried out by using, for instance, IR lamps or hot air or other heating elements, like electrical resistance heaters.

The orientation provides balanced mechanical characteristics. Film orientation greatly improves film's tensile strength, flexibility, and toughness. Orientation also enables the films to be used for heat-shrinking applications.

Preferably, the present mono-axially oriented polymer film has one or more of the following properties:
- Haze from 2 to 15%, more preferably from 3 to 10%;
- Gloss on film (at 45°C): from 45 to 100 GU, preferably from 60 to 90 GU;
- Tensile Modulus MD: from 1500 to 2500 MPa;
- Strength at break MD: from 150 to 300 MPa;
- Elongation at break MD: from 25 to 100%.

### EXAMPLES

The practice and advantages of the various embodiments, compositions and methods as provided herein are disclosed below in the following examples. These examples are illustrative only, and are not intended to limit the scope of the appended claims in any manner whatsoever.

The following analytical methods are used to characterize the polymer compositions.

### Melt flow index

Determined according to to ISO 1133-1 2012-03 at 190°C with the specified load.

### Density

Determined according to ISO 1183-1:2012 at 23°C, immersion method.

### Tensile modulus, Strength and Elongation at Yield and at Break

Determined according to ISO 527-2:2012 on compression molded plaques and ASTM D882- 18 on films.

### Gloss

Determined according to ASTM D-2457-13.

### Haze

Determined according to ASTM D-1003-13.

### Molecular Weight Distribution Determination

The determination of the means Mw, Mn and Mz and of Mw/Mn derived therefrom was carried out by high-temperature gel permeation chromatography using a method described in ISO 16014-1, -2, -4, issue of 2003. The specifics according to the mentioned ISO standards are as follows: Solvent 1,2,4-trichlorobenzene (TCB), temperature of apparatus and solutions 145°C and as concentration detector a PolymerChar (Valencia, Paterna 46980, Spain) IR-4 infrared detector, capable for use with TCB. A WATERS Alliance 2000 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used.

The solvent was vacuum distilled under Nitrogen and was stabilized with 0.025% by weight of 2,6-di-tert-butyl-4-methylphenol. The flowrate used was 1 ml/min, the injection was 500µl and polymer concentration was in the range of 0.01% < conc. < 0.05% w/w. The molecular weight calibration was established by using monodisperse polystyrene (PS) standards from Polymer Laboratories (now Agilent Technologies, Herrenberger Str. 130, 71034 Boeblingen, Germany) in the range from 580g/mol up to 11600000g/mol and additionally with Hexadecane.

The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: k_{PS}= 0.000121 dl/g, α_{PS}=0.706 and for PE k_{PE}= 0.000406 dl/g, α_{PE}=0.725, valid in TCB at 135°C. Data recording, calibration and calculation was carried out using NTGPC_Control_V6.02.03 and NTGPC _V6.4.24 (hs GmbH, Hauptstraße 36, D-55437 Ober-Hilbersheim, Germany) respectively.

### Comonomer content

The comonomer content was determined by means of IR in accordance with ASTM D 6248 98, using an FT-IR spectrometer Tensor 27 from Bruker, calibrated with a chemometric model for determining ethyl- side-chains in PE for butene-1 as comonomer and butyl- side-chains in PE for hexene-1 as comonomer.

### Examples 1-3 and Comparative Examples 1-3

This example discloses the production of samples of MDO polymer films and the characteristics of the obtained films.

The following commercially available starting materials, sold by LyondellBasell Industries, have been used.
Component A): Hostalen GD 9555 (**GD9555**)
   - MIP: 3.0 g/10 min;
   - MIF: 63 g/10 min;
   - Density: 0.953 g/cm³;
   - Tensile modulus: 1050 MPa on compression molded plaque;
   - Tensile Stress at Yield: 25 MPa on compression molded plaque;
   - Tensile Strain at Yield: 10% on compression molded plaque.
Component B): Luflexen hyPE 56P FA (**hyPE**)
   - MIE: 0.77 g/10 min;
   - MIF: 18.8 g/10min.;
   - MIP: 2.18 g/10 min.;
   - Density: 0.955 g/cm³;
   - Tensile modulus: 1220 MPa on compression molded plaque;

The molecular weights are reported in Table 1 below.

**Table 1**

| | **GD 9555** | **hyPE 56PFA** |
|---|---|---|
| Mw [g/mol] | 195382 | 147021 |
| Mn [g/mol] | 7116 | 11807 |
| Mw/Mn | 27.46 | 12.45 |
| Mz [g/mol] | 1078110 | 496325 |

Samples of MDO polyethylene films with the following polymer blends have been produced (the percentages are by weight with respect overall weight of the polymer blend).
- **Example 1:** 20% GD9555 + 80% hyPE;
- **Example 2:** 20% GD9555 + 80% hyPE;
- **Example 3:** 20% GD9555 + 80% hyPE;
- **Example 4:** 20% GD9555 + 80% hyPE;
- **Comparative Example 1:** 100% GD9555;
- **Comparative Example 2:** 100% GD9555;
- **Comparative Example 3:** 100% GD9555;
- **Comparative Example 4:** 100% GD9555.

In order to obtain the MDO films the following procedure has been used.

A primary film having a thickness of 1 mm was prepared using a Leonard line with the following features and under the following conditions:
- Extruder diameter: 40 mm, LID 27;
- Dosing gear pump;
- Flat die, with lip width 200 mm, die lip gap of 1 mm;
- Melt temperature: 240°C;
- 3 chill rolls having a diameter of 160 mm, with roll temperature of 45°C;
- Film cutting unit.

From the primary film, 93 x 93 mm specimens were cut. The specimens were then oriented in the machine direction (MD) using a Brueckner KARO IV stretching unit, under the following conditions:
- Pre-heating temperature: 122°C;
- heating time: 80 sec;
- Stretching speed: 28 mm/sec;
- Stretching rate: 40%/sec.;
- stretching area: 70 x 70 mm (out of clamps);
- stretch ratio: see Table 2;
- final thickness: see Table 2.

The Brueckner KARO IV stretching unit was used to reproduce the mono-axial stretching step, which on industrial scale is generally carried out by conveying the film through rollers.

The MDO polymer films produced had the characteristics indicated in Table 2 below.

**Table 2**

| **Example** | | **1** | **2** | **3** | **4** |
|---|---|---|---|---|---|
| Stretch ratio | | 6 | 7 | 8 | 9 |
| Haze on film | % | 5.1 | 4.9 | 4.3 | 4.0 |
| Gloss on film (at 45°C) | GU | 82.5 | 83.1 | 85.7 | 85.7 |
| Film thickness | µm | 199 | 193 | 180 | 191 |
| Tensile Modulus MD | N/mm² | 2050 | 2208 | 2145 | 1960 |
| Strength at break MD | MPa | 193.0 | 219.0 | 236.0 | 219.0 |
| Elongation at break MD | % | 70 | 50 | 60 | 40 |

**Table 2 cont.**

| **Example** | | **Comp. 1** | **Comp. 2** | **Comp. 3** | **Comp. 4** |
|---|---|---|---|---|---|
| Stretch ratio | | 6 | 7 | 8 | 9 |
| Haze on film | % | 8.6 | 7.7 | 10.4 | 8.1 |
| Gloss on film (at 45°C) | GU | 69.7 | 71.9 | 68.2 | 69.8 |
| Film thickness | µm | 160 | 132 | 145 | 145 |
| Tensile Modulus MD | N/mm² | 1590 | 1758 | 1811 | 2100 |
| Strength at break MD | MPa | 160.0 | 230.0 | 207.0 | 247.0 |
| Elongation at break MD | % | 67 | 36 | 52 | 27 |

As previously explained, MD means in the "machine direction". In other words, it means that the measurement is carried out in the direction of the extrusion.

## Claims

1. A polymer blend comprising:
A) from 2 to 35 wt.%, preferably from 5 to 30 wt.%, more preferably from 10 to 30 wt.%, of a first polyethylene component, which has a density from 0.948 to 0.960 g/cm³, a Melt Index MIF from 35 to 100 g/10min and Melt Flow Ratio MIF/MIP from 15 to 30 (in particular, up to 25); and
B) from 65 to 98 wt.%, preferably from 70 to 95 wt.%, more preferably from 70 to 90 wt.%, of a second polyethylene component having a density from 0.949 to 0.965 g/cm³ and a Melt Index MIF from 5 to 30 g/10 min.;
wherein the wt.% of the first polyethylene component A) and of second polyethylene component B) is with respect to the overall weight of A) and B); MIF is the Melt Index measured with 21.6 kg at 190°C according to to ISO 1133-1 2012-03; MIP is the Melt Index measured with 5 kg at 190°C according to to ISO 1133-1 2012-03.

2. The polymer blend according to Claim 1, wherein said first polyethylene component A) has a Mw/Mn equal to or higher than 20.0, preferably equal to or higher than 22.0, more preferably equal to or higher than 24, wherein Mw is the weight average molecular weight, Mn is the number average molecular weight, both measured with gel permeation chromatography (GPC).

3. The polymer blend according to Claim 1or 2, wherein said second polyethylene component B) has a Mw/Mn equal to or lower than 18.0, preferably equal to or lower than 15.0.

4. The polymer blend according to Claim 1 or 2, wherein said first polyethylene component A) has a z-average molecular weight Mz equal to or higher than 800000 g/mol, preferably equal to or higher than 900000 g/mol, measured with gel permeation chromatography (GPC).

5. The polymer blend according to Claim 1 or 2, wherein said second polyethylene component B) has a z-average molecular weight Mz lower than 800000 g/mol, preferably equal to or lower than 750000 g/mol.

6. The polymer blend according to Claim 1 or 2, wherein said first polyethylene component A) has a tensile modulus on compression molded plaque of at least 650 MPa.

7. The polymer blend according to Claim 1 or 2, wherein said second polyethylene component B) has a Melt Index MIE from 0.1 to 3 g/min.; wherein MIE is the Melt Index measured with 2.16 kg at 190°C according to to ISO 1133-1 2012-03.

8. The polymer blend according to Claim 1 or 2, wherein said second polyethylene component B) has MIFIMIP from 5 to 14, preferably from 5 to 12.

9. A mono-axially oriented polymer film consisting of or comprising a polymer blend according to any one of Claims 1 to 8.

10. The mono-axially oriented polymer film according to Claim 9, having a thickness equal to or smaller than 250 µm.

11. The mono-axially oriented polymer film according to Claim 9, which is a machine direction oriented (MDO) film.

12. The mono-axially oriented polymer film according to Claim 9, stretched with a stretch ratio from 3:1 to 9:1, preferably in machine direction (MD).

13. Method of production of the mono-axially oriented polymer film according to any of Claims 8 to 12, comprising a stretching step, during which a primary film comprising the polymer blend according to any one of Claims 1 to 8 is stretched in one direction, preferably in machine direction (MD).

14. The method according to Claim 13, wherein the primary film has a thickness of at least 0.3 mm.
